# FASCICULE DE BREVET EUROPEEN

(11) **EP 1 188 948 B1**
(45) Date de publication et mention de la délivrance du brevet: **17.11.2004**
(21) Numéro de dépôt: 01000450.5
(22) Date de dépôt: 12.09.2001
(51) Int. Cl.: F16F 1/38, B60G 13/00

(54) **Articulation élastique d'amortisseur et amortisseur muni d'une telle articulation élastique**
Elastisches Gelenk für einen Stossdämpfer and Stossdämpfer mit einem solchen Gelenk
Elastic joint of a shock absorber and shock absorber with such a joint

(30) Priorité: 18.09.2000 FR 0011897
(43) Date de publication de la demande: 20.03.2002
(73) Titulaire: Michelin AVS S.A.S., 78035 Versailles (FR)
(72) Inventeur: Skiera, Jean-François, 58340 Cercy-la-Tour (FR)
(74) Mandataire: Weber-Bruls, Dorothée, Dr.

(56) Documents cités:
- DE-A- 1 775 788
- FR-A- 2 684 903
- FR-A- 2 715 702
- GB-A- 382 983
- GB-A- 732 456
- US-A- 2 107 974

## Description

La présente invention a pour objet une articulation élastique d'amortisseur, notamment d'amortisseur de voiture et un amortisseur muni d'une telle articulation élastique. Le but de l'invention est d'améliorer les performances de telles articulations, et donc des amortisseurs, tout en diminuant par ailleurs leurs prix. L'articulation élastique est destinée à équiper un oeil d'un amortisseur, un tel oeil étant une partie tubulaire de l'extrémité de celui-ci.

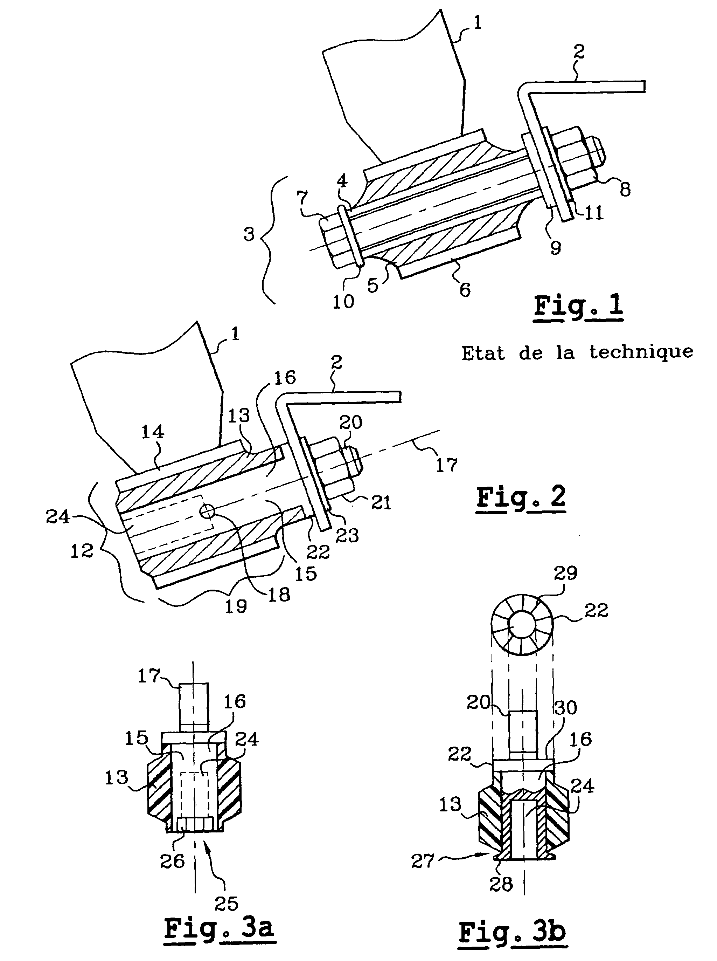

Dans le domaine automobile, une articulation élastique d'amortisseur est un organe qui relie un amortisseur à un châssis de ce véhicule, ou à un moyeu d'une roue par l'intermédiaire d'un bras de roue. La figure 1 montre un exemple d'une réalisation d'une telle articulation élastique dans l'état de la technique. Un amortisseur 1 est ainsi fixé à un bras de roue 2 par l'intermédiaire d'une articulation élastique 3. L'articulation élastique comporte une douille interne 4 qui est enveloppée par un manchon élastique 5 venant au contact d'une douille externe 6. La douille externe 6 est fixée à l'amortisseur 1 ou est emmanchée à l'intérieur d'une douille complémentaire (non représentée) solidaire de cet amortisseur 1. Un boulon 7 passe au travers de la douille 4 et au travers d'un trou réalisé dans le bras de roue 2. Un écrou 8 vissé sur le boulon 7 permet de lier l'amortisseur 1 au bras 2. Des rondelles d'appui telles que 9 et 10 sont nécessaires pour éviter respectivement le poinçonnage du bras 2, généralement en tôle emboutie, et le matage de l'extrémité de la douille. Dans une telle solution classique la douille 4 est symétrique pour pouvoir être assemblée sans erreur sous la caisse.

En variante, il est connu de réaliser l'articulation élastique par une articulation creuse comme l'ensemble 4-6, symétrique, mais dont l'intérieur de la douille 4 est fileté. Cette articulation creuse est montée sur l'amortisseur puis le tout est présenté en aveugle face au bras de roue. Un boulon de fixation est alors engagé dans le filetage. Cette variante, qui ne réduit pas les difficultés de montage du fait de la difficulté d'engager le boulon dans le filetage, présente encore la particularité que l'articulation doit être symétrique pour éviter les erreurs de montages. En effet, si elle n'était pas symétrique, il serait possible de faire tourner l'amortisseur sur lui-même, avant la fixation en aveugle, et d'engager le boulon par le mauvais coté dans le filetage.

Les inconvénients présentés par ces solutions sont les suivants. Premièrement la symétrie de conception de la douille augmente la longueur de cette dernière par rapport à la longueur strictement nécessaire à l'obtention des caractéristiques (imposées par un cahier des charges) de raideur de l'attache. Cependant, dans le domaine automobile, du fait que le montage est effectué en aveugle sous la caisse, une telle symétrie apparaît nécessaire pour éviter les pertes de temps au montage, ainsi que les erreurs de montage. Le coût de ces pertes de temps serait supérieur au coût supplémentaire dû à la forme symétrique de l'articulation élastique. Pour un constructeur cependant, cette longueur augmentée va à l'encontre de la lutte contre le poids des véhicules, d'autant plus que l'articulation élastique peut également être utilisée en fixation de l'amortisseur sur la caisse du véhicule.

Cette longueur supplémentaire présente à titre secondaire une limitation de performance de l'amortisseur car l'articulation élastique en elle-même, étant plus grande, est plus lourde. En effet, une des articulations élastiques est fixée à l'extrémité mobile de l'amortisseur 1. Or, pour que celui-ci puisse avoir une efficacité plus grande, il convient que les masses à entraîner soit les plus faibles possibles. Le supplément de matière nuit ainsi à la performance de l'amortisseur.

D'autre part, du fait de l'inclinaison du montage de l'articulation élastique, la partie inférieure de celle-ci, celle où se trouve la tête du boulon 7, présente un encombrement plus grand, et réduit en outre dans certains cas la garde au sol du véhicule. Enfin, le montage en aveugle nécessite d'aligner la douille 4 avec le trou dans le bras 2, d'y passer le boulon 7 sans oublier la rondelle 9, la rondelle 10 et éventuellement une contre rondelle 11 avant de visser l'écrou 8. Le vissage lui-même nécessite le maintien de la tête 7 en même temps que l'écrou 8 est manoeuvré. Il en résulte une difficulté de montage, nécessitant en pratique deux mains ou deux outils. Et ce montage est trop long à accomplir.

GB-A-732 456 se réfère à une articulation élastique comprenant une tige pleine avec une première partie de fixation et une deuxième partie entourant une structure de douille extérieure et une couche élastique déposée entre la douille intérieure et la deuxième partie de la tige pleine.

L'invention a pour objet de remédier à ces inconvénients en modifiant le principe de montage d'un amortisseur sur un bras de roue ou sur la caisse d'un véhicule. Dans l'invention plutôt que d'utiliser une douille 4 et un boulon 7, on prévoit de réaliser l'articulation avec un boulon dont la tête est allongée et occupe en définitive tout ou partie de l'espace délimité par la douille de l'état de la technique. La tête de ce boulon forme donc une armature intérieure de l'articulation élastique. L'enveloppe élastique 5 est alors surmoulée sur cette tête de boulon, ou solidarisée de manière connue. L'embout fileté de ce boulon forme une projection de fixation au delà de l'articulation. Au moment du montage, l'ensemble est préalablement monté sur la base de l'amortisseur. L'amortisseur se présente alors avec l'embout fileté du boulon qui dépasse du moyeu élastique ainsi constitué. Il suffit alors de pousser l'amortisseur 1 de telle façon que l'embout fileté du boulon vienne s'engager dans le trou du bras. Il ne reste plus qu'à visser un écrou. On montrera qu'il n'est même pas nécessaire de maintenir le boulon, le vissage s'effectuant alors d'une seule main sans autre maintien.

Le boulon fabriqué n'est pas symétrique. Il comporte une tête formant l'armature intérieure de l'articulation élastique et une projection de fixation, de préférence filetée débouchant de la tête. Que ce soit dans l'état de la technique ou dans l'invention, l'articulation est montée sur l'amortisseur avant montage sur le véhicule. Du fait de son caractère asymétrique, une erreur de montage de l'articulation de l'invention est cependant impossible car la partie en projection (le filetage quand l'embout est fileté) est unique et proéminente et assure la visée. Le vissage de l'écrou, qui peut être aussi effectué en aveugle ne pose pas de problème, d'autant plus que la rondelle peut être intégrée à l'écrou.

L'invention a donc pour objet une articulation élastique d'amortisseur selon la revendication 1.

De préférence la projection est filetée. En d'autres termes, l'armature comporte une tête, de préférence au moins en partie creuse, formant un corps de l'articulation élastique et dont un embout déborde de ce corps.

L'invention a encore pour objet un amortisseur muni d'une articulation élastique comme indiquée ci-dessus, cette articulation élastique étant munie d'une cavité, un accessoire de l'amortisseur ou du véhicule pouvant être disposé dans la cavité.

L'invention a encore pour objet un amortisseur emmanché à force sur une articulation comme ci-dessus, ou muni d'une telle articulation.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : déjà commentée, une vue d'une articulation élastique d'amortisseur de l'état de la technique ;
- Figure 2 : une vue d'une articulation élastique d'amortisseur selon l'invention ;
- Figures 3a et 3b : des détails de réalisation et des perfectionnements apportés à une articulation élastique augmentant encore sa performance et/ou sa facilité de montage.

La figure 2 montre un amortisseur 1 fixé à un bras de roue 2 par une articulation élastique 12 d'amortisseur selon l'invention. L'articulation élastique 12 comporte un manchon élastique 13. Le manchon 13 porte par sa surface extérieure contre une douille 14 solidaire, ou formant l'oeil, de l'amortisseur 1. Le manchon élastique 13 porte par sa face intérieure contre une tête 15 d'une armature intérieure 16. L'articulation élastique 12 est prévue pour que, sans glissement, l'amortisseur 1 puisse osciller élastiquement d'environ 20° autour d'un axe 17 de l'armature 16. L'épaisseur du manchon 13 est par ailleurs calculée pour que l'amortisseur 1 puisse osciller autour d'un axe 18 perpendiculaire à l'axe 17 et à l'amortisseur 1 lui-même, de quelques degrés. Le manchon 13 est fixé à l'intérieur de la douille 14 et à la périphérie de la tête 15 de l'armature 16 pour résister à des efforts de translation axiale selon l'axe 17 supérieurs à 1000 DaN. Dans la pratique, compte tenu des autres organes de mise en place de l'amortisseur 1 et du bras de roue 2 de tels efforts de translation sont généralement limités à des efforts de l'ordre de 300 à 400 DaN.

Un ordre de grandeur de résistance au démanchement de l'articulation est de 300 à 400 DaN. Dans une version avec un épaulement externe 28 cette résistance peut augmenter, par exemple à 500 DaN. Si de plus l'articulation est adhérisée dans l'oeil, on peut envisager des valeurs de 1000 DaN, pour lesquelles on peut parler de sécurisation de l'articulation au sens où son démanchement devient impossible (compte tenu de la résistance des autres éléments).

La tête 15 de l'armature 16 forme un corps 19 de l'articulation 12 alors qu'un embout fileté 20 formant une projection de fixation déborde de ce corps. La longueur du débordement est suffisante pour que l'embout fileté 20 passe à travers un trou réalisé dans le bras de roue 2 (ou dans la caisse d'un véhicule), et pour permettre de visser un écrou 21 sur cet embout fileté 20. De manière à ce que l'écrou 21 ne poinçonne pas le bras de roue 2, réalisé en tôle de plus en plus mince (pour des économies de matière), on prévoit que la tête 15 sera munie d'un premier épaulement 22 et, de préférence, que l'écrou 21 sera muni d'une rondelle, fixe ou mobile 23, assurant une répartition plus large des efforts de serrage. Le premier épaulement 22 est ainsi placé en position intermédiaire entre l'embout 20 et la tête 15 de l'armature 16.

La réalisation d'un filetage n'est cependant pas indispensable, tout en étant un mode préféré de réalisation de l'invention. Par exemple, il est possible de réaliser dans la projection formée par l'embout 20 une rainure circulaire est d'y placer une bague ouverte élastique, un clips. Ou bien une chape peut être collée sur la partie apparente de la projection après que celle-ci ait été placée dans un orifice qui la reçoit.

Les figures 3a et 3b donnent des détails de réalisation de l'articulation élastique, et en particulier de l'armature 16. Cette armature est en fer ou en acier, mais elle peut également être en alliage d'aluminium ou, dans certaines applications, en matière plastique. Figure 3a, la tête 15 de l'armature 16 est creuse et est munie d'une cavité 24. Cette cavité 24, qui peut être de préférence coaxiale à l'axe 17, a pour principal objet de réduire le poids de l'articulation élastique au prorata de la matière enlevée dans la cavité. Dans une variante préférée, la cavité 24 est même munie, au moins à son entrée 25 d'une forme permettant son blocage en rotation, par exemple, hexagonale à six pans creux 26, ou carrée à quatre pans creux. La partie 26 de la cavité 24 permet, notamment lors du démontage de l'amortisseur, de maintenir l'armature 16, au cas où la partie apparente de l'embout 20 après vissage aurait été déformée, ou altérée chimiquement. La forme avec pans creux assure ainsi une fonction anti-rotation. La cavité 24, également montrée sur la figure 2 permet par ailleurs de clipser un accessoire, notamment par exemple un tapis anti-gravillons qui protégera l'amortisseur et ou d'autres organes des projections de la roue lors du roulement. La cavité 24 est débouchante au sommet de l'armature.

Sur la figure 3b, on a montré que l'armature 16 comporte au sommet 27 de la tête 15 de l'armature un épaulement dit ici externe 28. Cet épaulement peut être réalisé de diverses manières mais, notamment lorsqu'une cavité 24 sera présente, l'épaulement 28 externe peut être réalisée par une bouterolle qui repousse la matière de la tête de l'armature vers la périphérie extérieure de la cavité. Enfin la figure 3b montre en vue de dessus des dents 29 en relief réalisées sur une face d'appui 30 de l'épaulement 22 en regard de l'embout 20. Un procédé de bouterollage mettant en oeuvre une telle bouterolle est notamment décrit dans le document FR-A-2 684 903.

Le procédé de fabrication de cette armature comporte notamment des étapes suivantes de frappe à froid. Ces opérations de frappe à froid ne sont pas essentielles, d'autres méthodes de base comme le décolletage peuvent s'avérer utiles pour des installations situées dans des pays à faible coût de main d'oeuvre, ou pour de petites séries. Au cours d'une première étape de frappe à froid, on réalise à partir d'un lopin d'acier la partie externe, en amorce, de la tête de l'armature et du premier épaulement 22, dans une matrice ayant un diamètre égal au diamètre de cet épaulement 22 et avec un marteau creux coulissant dans cette matrice. Le marteau a un diamètre extérieur égal au diamètre de la matrice et un diamètre intérieur égal au diamètre extérieur de la tête de l'armature.

Au cours d'une deuxième étape de frappe à froid, en une passe, avec une autre matrice et un autre marteau, on fait ressortir l'embout 2 en même temps qu'on réalise les dents 29 sur la face 30. Cette autre matrice possède donc aussi un marteau creux avec des rainures radiales marquées sur sa tête pour correspondre aux dents 29 et avec un diamètre interne égal au diamètre extérieur des filets de l'embout 20. Les dents 29 peuvent être réalisée en relief ou en creux.

De préférence, au cours d'une troisième étape de frappe à froid, on réalise la cavité 24 avec ou sans la forme en quatre ou six pans creux. Dans ce cas, la troisième matrice comporte un diamètre extérieur égal au diamètre extérieur de la tête de l'armature et un marteau central plein (circulaire ou avec une périphérie à facette, en tout ou partie de sa profondeur).

Pour réaliser le filet de l'embout 20, on procède par roulage de l'armature 16. Ces opérations de frappe à froid présentent l'intérêt d'être des opérations très bon marché. Une fois qu'elles sont réalisées, on procède à la mise en place du manchon élastique 13. Celui-ci peut être réalisé d'avance et emmanché à force sur la tête 15 de l'armature 16, ou bien il peut être surmoulé à la tête 15 de l'armature 16 et y adhérer par vulcanisation, notamment lorsqu'il est en caoutchouc. En variante, le manchon élastique 13 est préalablement (ou postérieurement) muni d'une armature externe en forme de douille. Au besoin, le manchon 13 comporte de façon connue des armatures intermédiaires dans le but d'augmenter sa raideur radiale.

L'armature ainsi munie de son manchon élastique qui l'enveloppe peut ensuite subir deux opérations. Une première opération optionnelle peut consister à réaliser l'épaulement externe 28, notamment au moyen d'une bouterolle si une cavité 24 a été réalisée. Comme deuxième opération, l'armature 16 munie de son manchon 13 est montée dans la douille 14 solidaire de l'amortisseur 1. Ce montage peut être réalisé par un emmanchement à force. Dans le cas de cet emmanchement à force, un compromis doit être trouvé pour la dureté et l'épaisseur du manchon 13 de façon à provoquer une compression suffisante du caoutchouc (condition dans laquelle celui-ci présente les meilleures caractéristiques de réaction élastique), de façon à rattraper les retraits de matière au vieillissement mais de façon aussi à éviter les surcompressions tendant à éjecter naturellement le manchon 13 de la douille 14 et ou hors de la tête 15 de l'armature 16. A cet effet, l'épaulement 22 forme utilement une rive de blocage du coulissement de ce manchon 13. De même, on préfère mettre en place l'épaulement externe 28, de sorte que le manchon caoutchouc 13 peut être comprimé au-delà d'un taux de compression qui aurait été autorisé si ces deux épaulements n'avaient pas été présents. Il en résulte une meilleure efficacité de la fixation de l'amortisseur. Dans le cas où le manchon comporte une armature externe, cette armature externe est montée dans la douille formant l'oeil de l'amortisseur.

Une fois que l'articulation 12 a été montée dans la douille 14, par emmanchement à force ou par polymérisation en place du manchon 13, il suffit pour monter l'amortisseur 1 sur le bras de roue 2 de saisir l'amortisseur 1 et de le déplacer de façon à ce que l'embout fileté 20 pénètre dans le trou du bras 2 de fixation de roue. Dans ce cas, l'assemblage est facilité sous la caisse car l'alignement pour l'embout fileté se trouve tout seul, car il n'y a pas de rondelle d'appui indépendante à maintenir au moment de la fixation, et car il suffit de saisir l'amortisseur et de le pousser vers sa position finale. Le serrage de l'écrou est alors possible sans même avoir à maintenir l'articulation élastique ou l'amortisseur, surtout en présence des dents. En effet, au début du serrage, la résistance en rotation présenté par le montage de la tête de l'armature dans le manchon 13 et dans la douille 14 est suffisante pour exercer la réaction nécessaire de l'armature à l'égard de l'écrou. Lorsque le serrage devient plus fort, la pénétration des dents 29 dans la tôle du bras 2 contribue encore à son maintien. De ce fait une seule main peut être utilisée pour effectuer le serrage de montage. La présence des dents (ce qui améliore la friction) permet par ailleurs un serrage plus léger, ce qui permet d'employer un acier moins résistant donc meilleur marché.

Du fait du caractère massif de l'armature 16, on constate par rapport à l'état de la technique un gain de matière (et donc de coût) résultant notamment de ce que l'articulation n'est plus symétrique et aussi de la disparition de la douille 4 puisque auparavant cette douille 4, qui devait collaborer avec le boulon 7 occupait nécessairement une certaine épaisseur en diamètre.

Dans un exemple préféré mais nullement limitatif, le diamètre extérieur de la tête 15 est de 18 mm, le diamètre extérieur de l'embout 2 est de 12 mm, la hauteur de la tête est de l'ordre de 41 mm, la hauteur de l'embout étant de l'ordre de 20 mm. Dans un exemple préféré, le diamètre de l'épaulement 22 sera de l'ordre de 27 mm soit environ le double du diamètre de l'embout fileté 20. En pratique, on pourrait descendre jusqu'à 1,5 fois le diamètre de cet embout fileté, mais de préférence le diamètre de l'épaulement 22 sera plus de deux fois supérieur au diamètre de cet embout fileté. Les limites de 1,5 ou 2 fois le diamètre de la partie filetée dépendent en fait du matériau et de l'épaisseur de la pièce sur laquelle vient se fixer l'amortisseur. La longueur de l'embout fileté est de 36 mm. De même la cavité pourrait être traversante dans certaines applications. Avec la présence de la cavité 24, et avec l'absence de douille 4, l'allégement résultant est de l'ordre de plus des deux tiers du poids du boulon 7 de l'état de la technique. En pratique la cavité 24 aura une profondeur au plus égale au deux tiers de la hauteur de la tête 15.

## Revendications

1. Articulation élastique (12) d'amortisseur (1) destinée à équiper un oeil d'un amortisseur pour permettre sa fixation sur un véhicule, cette articulation élastique comportant un manchon élastomérique (13) et une armature intérieure (16) contre laquelle porte ce manchon, l'armature intérieure comportant une projection (20) de fixation, **caractérisée en ce que** l'armature intérieure comporte une cavité (24) débouchant à son extrémité opposée à la projection de fixation.

2. Articulation selon la revendication 1, **caractérisée en ce que** la projection est filetée.

3. Articulation selon l'une des revendications 1 à 2, **caractérisée en ce que** l'armature intérieure comporte un épaulement interne (22) situé en position intermédiaire entre une tête (15) maintenant le manchon et la projection (20) de l'armature.

4. Articulation selon la revendication 3, **caractérisée en ce que** l'épaulement interne comporte des dents (29), en relief ou en creux, sur une face d'appui (30) en regard de la projection.

5. Articulation selon l'une des revendications 3 à 4, **caractérisée en ce que** l'épaulement interne est circulaire et possède un diamètre plus grand ou égal à une fois et demi le diamètre de la projection.

6. Articulation selon l'une des revendications 1 à 5, **caractérisée en ce que** l'armature intérieure comporte un épaulement externe (28) de retenue du manchon élastomérique, cet épaulement externe étant situé au sommet d'une tête de l'armature intérieure.

7. Articulation selon l'une des revendications 1 à 6, **caractérisée en ce que** la cavité a une forme (26) assurant une fonction anti-rotation.

8. Articulation selon l'une des revendications 1 à 7, **caractérisée en ce que** l'armature intérieure comporte un épaulement externe (28) de retenue du manchon élastomérique, cet épaulement externe étant obtenu par bouterollage.

9. Articulation selon l'une des revendications 1 à 8, **caractérisée en ce que** le manchon élastomérique de l'articulation élastique est emmanché à force sur l'armature intérieure.

10. Amortisseur comportant une articulation élastique selon l'une des revendications 1 à 9.

## Patentansprüche

1. Elastisches Gelenk (12) für einen Stoßdämpfer (1), das an einer Öse eines Stoßdämpfers anbringbar sei, um dessen Befestigung an einem Kraftfahrzeug zuzulassen, wobei dieses elastische Gelenk eine Elastomer-Hülse oder -Muffe (13) und eine Innenarmatur (16) umfaßt, durch welche diese Hülse getragen ist, wobei die Innenarmatur einen Befestigungsvorsprung (20) umfaßt, **dadurch gekennzeichnet, daß** die Innenarmatur einen Hohlraum (24) umfaßt, der sich an seinem dem Befestigungsvorsprung gegenüberliegenden Ende öffnet.

2. Gelenk nach Anspruch 1, **dadurch gekennzeichnet, daß** der Vorsprung mit einem Gewinde versehen ist.

3. Gelenk nach einem der Ansprüche 1 bis 2, **dadurch gekennzeichnet, daß** die Innenarmatur eine innere Schulter (22) umfaßt, die zwischen einem Kopf (15), der die Hülse hält, und dem Vorsprung (20) der Armatur angeordnet ist.

4. Gelenk nach Anspruch 3, **dadurch gekennzeichnet, daß** die innere Schulter Zähne (29), die erhaben oder vertieft sind, an einer dem Vorsprung gegenüberliegenden Abstützfläche (30) aufweist.

5. Gelenk nach einem der Ansprüche 3 bis 4, **dadurch gekennzeichnet, daß** die innere Schulter kreisförmig ist und einen Durchmesser aufweist, der größer oder gleich dem Eineinhalbfachen des Durchmessers des Vorsprungs ist.

6. Gelenk nach einem der Ansprüche 1 bis 5, **dadurch gekennzeichnet, daß** die Innenarmatur eine äußere Schulter (28) zum Halten der Elastomer-Hülse umfaßt, wobei diese äußere Schulter am oberen Ende eines Kopfs der Innenarmatur angeordnet ist.

7. Gelenk nach einem der Ansprüche 1 bis 6, **dadurch gekennzeichnet, daß** der Hohlraum eine Form (26) aufweist, die eine Anti-Dreh-Funktion gewährleistet.

8. Gelenk nach einem der Ansprüche 1 bis 7, **dadurch gekennzeichnet, daß** die Innenarmatur eine äußere Schulter (28) zum Halten der Elastomer-Hülse umfaßt, wobei diese äußere Schulter durch ein Bouterollage-Verfahren hergestellt ist.

9. Gelenk nach einem der Ansprüche 1 bis 8, **dadurch gekennzeichnet, daß** die Elastomer-Hülse des elastischen Gelenks an die Innenarmatur aufgedrückt ist.

10. Stoßdämpfer mit einem elastischen Gelenk nach einem der Ansprüche 1 bis 9.

## Claims

1. An elastic joint (12) for a shock absorber (1) intended to equip an eye of a shock absorber to enable it to be fixed on a vehicle, said elastic joint comprising an elastomeric sleeve (13) and an inner frame (16) against which the said sleeve bears, the inner frame comprising a fixing projection (20), **characterised in that** the inner frame comprises a cavity (24) opening out at its end remote from the fixing projection.

2. A joint according to claim 1, **characterised in that** the projection is screwthreaded.

3. A joint according to claim 1 or 2, **characterised in that** the inner frame comprises an inner shoulder (22) situated midway between a head (15) holding the sleeve and the projection (20) of the frame.

4. A joint according to claim 3, **characterised in that** the inner shoulder comprises teeth (29), raised or recessed, on a bearing surface (30) facing the projection.

5. A joint according to claim 3 or 4, **characterised in that** the inner shoulder is circular and has a larger diameter or a diameter equal to one and a half times the diameter of the projection.

6. A joint according to any one of claims 1 to 5, **characterised in that** the inner frame comprises an outer shoulder (28) retaining the elastomeric sleeve, said outer shoulder being situated at the top of a head of the inner frame.

7. A joint according to any one of claims 1 to 6, **characterised in that** the cavity has a shape (26) providing an anti-rotation function.

8. A joint according to any one of claims 1 to 7, **characterised in that** the inner frame comprises an outer shoulder (28) retaining the elastomeric sleeve, said outer shoulder being obtained by snap riveting.

9. A joint according to any one of claims 1 to 8, **characterised in that** the elastomeric sleeve of the elastic joint is force-fitted on the inner frame.

10. A shock absorber comprising an elastic joint according to any one of claims 1 to 9.
